# EUROPÄISCHE PATENTSCHRIFT

(11) **EP 0 946 895 B1**
(45) Veröffentlichungstag und Bekanntmachung des Hinweises auf die Patenterteilung: **28.08.2002**
(21) Anmeldenummer: 97952725.6
(22) Anmeldetag: 15.12.1997
(51) Int. Cl.: G02B 27/22, H04N 13/00

(54) **VERFAHREN UND ANORDNUNG ZUR DREIDIMENSIONALEN DARSTELLUNG VON INFORMATION**
METHOD AND DEVICE FOR THE THREE-DIMENSIONAL REPRESENTATION OF INFORMATION
PROCEDE ET DISPOSITIF POUR LA REPRESENTATION TRIDIMENSIONNELLE D'INFORMATIONS

(30) Priorität: 18.12.1996 DE 19652689; 20.08.1997 DE 19736035
(43) Veröffentlichungstag der Anmeldung: 06.10.1999
(73) Patentinhaber: Dresden 3D GmbH, 01307 Dresden (DE)
(72) Erfinder: SCHWERDTNER, Armin, D-01259 Dresden (DE); HEIDRICH, Holger, D-01728 Gaustritz (DE)
(74) Vertreter: Uhlemann, Henry, Dipl.-Chem.
(86) Internationale Anmeldenummer: DE9702910
(87) Internationale Veröffentlichungsnummer: WO98027451

(56) Entgegenhaltungen:
- EP-A- 0 354 851
- EP-A- 0 721 131
- DE-U- 29 612 054
- EZRA D ET AL: "BLICK IN DIE DRITTE DIMENSION NEUES AUTOSTEREOSKOPISCHES 3D-DISPLAY-SYSTEM" FERNSEH UND KINOTECHNIK, Bd. 50, Nr. 3, 1.März 1996, Seiten 79-82, XP000581416 in der Anmeldung erwähnt
- "AUTOSTEREOSCOPIC 3-D IMAGE DISPLAY DEVICE" IBM TECHNICAL DISCLOSURE BULLETIN, Bd. 37, Nr. 8, 1.August 1994, Seiten 463-465, XP000456491 in der Anmeldung erwähnt
- R. BÖRNER: "AUTOSTEREOSCOPIC 3D-IMAGING BY FRONT AND REAR PROJECTION AND ON FLAT PANEL DISPLAYS" DISPLAYS, Bd. 14, Nr. 1, 1993, Seiten 39-46, XP002064233 in der Anmeldung erwähnt

## Beschreibung

Die Erfindung betrifft ein autostereoskopisches Verfahren und eine Anordnung zur dreidimensionalen Darstellung von Information nach einem Barriere-, Linsenraster-, Prismenmasken- oder einem diesen ähnlichen Verfahren unter Verwendung von Flachdisplays (Flüssigkristall- Plasma- Elektrolumineszenz- oder andere Displays) für die Computer- und Videotechnik, für Spiele und Werbung, in der Medizintechnik, im Bereich virtuelle Realität und in anderen Bereichen.

Zur dreidimensionalen Darstellung von Information sind bereits einige autostereoskopische Verfahren, darunter das Barriere-, Linsenraster- und das Prismenmaskenvcrfahren bekannt (s. z. B. S. Pastoor: 3D-Display-Technologie, Euroforum-Konferenz Display 1996, 17. und 18. April 1996 in Nürtingen; D. Ezra, u. a.: Blick in die dritte Dimension. In: Fernseh- und Kinotechnik, 50. Jahrgang, Nr. 3/1996, S. 79 bis 82; DE 296 12 054 U1; R. Börner: Autostereoscopic 3D-imaging by front and rear projection an on flat panel displays. In: Displays, Band 14, Nr. 1, 1993, S. 39 bis 46; Autostereoscopic 3-D Image Display Device. In: IBM TDB, Band 37, Nr. 8, August 1994, S. 463 bis 465).

Bei diesen Verfahren werden mit einem Displays gleichzeitig zwei stereoskopische Halbbilder, eines für das rechte und eines für das linke Auge des Betrachters, erzeugt und in eine Vielzahl in einem Display oder einem Bildschirm horizontal nebeneinanderliegender vertikaler Spalten aufgelöst, ein Halbbild in Spalten für das rechte Auge (im folgenden rechte Spalten), das andere in Spalten für das linke Auge (im folgenden linke Spalten). Die rechten und linken Spalten folgen abwechselnd aufeinander. Jeweils zwei aufeinander folgende Spalten, eine rechte und eine linke, bilden ein Spaltenpaar. Der Betrachter gewinnt dank seines Sehvermögens aus den von den Spalten gebildeten zwei ebenen, streifenförmigen Halbbildern einen räumlichen Bildeindruck.

Das Display, mit denen die Halbbilder erzeugt werden, enthält eine Vielzahl von Pixeln, die in einer Matrix angeordnet sind und vertikal untereinander die Spalten für die Halbbilder zusammensetzen. Bei üblichen Direktsicht-Farbdisplays besteht jedes Pixel in technischer Hinsicht aus drei Farbsubpixeln für die drei Grundfarben Rot (R), Grün (G) und Blau (B). Bei anderen ist die Zahl der Farbsubpixel erhöht, z. B. ist für jedes Pixel ein zweites B-Farbsubpixel vorgesehen. Verallgemeinert besteht jedes Pixel aus n Farbsubpixeln. In der Überlagerung der Farbanteile der jeweils n Farbsubpixel der Pixel entstehen auf dem Display Bildpunkte, die in ihrem Raster der Matrix der Pixel entsprechen. Mit jeder Pixelspalte wird eine Bildspalte aus einem der beiden Halbbilder auf dem Bildschirm abgebildet. Jede Spalte hat pro Zeile einen Bildpunkt.
Die Farbsubpixel sind üblicherweise in den Pixeln horizontal nebeneinander angeordnet und wiederholen sich in den Zeilen periodisch, z. B. RGB, RGB, ... oder BRGB, BRGB, ... Die Reihenfolge und die Zahl n der Farbsubpixel pro Periode werden vom Design des jeweiligen Displays bestimmt. Jedem Farbsubpixel ist ein Farbfilter zugeordnet. Jedes Farbsubpixel wird entsprechend dem jeweiligen Intensitätswert angesteuert. Die Intensitätswerte werden programmtechnisch für jeden Bilddurchlauf vorgegeben.

Mit optischen Mitteln werden die Informationen in den rechten und linken Spalten dem rechten und linken Auge eines Betrachters zugeordnet, z. B. in sie abgebildet. Beim Linsenrastersystem ist jedem Spaltenpaar eine Zylinderlinse zugeordnet. Beim Barriereverfahren werden die Spalten durch linienförmige Barrieren so abgedeckt, daß das linke Auge nur die linken und das rechte Auge nur die rechten Spalten sehen kann, während jeweils die anderen Spalten abgeschattet sind. Beim Prismenmaskenverfahren sind vor den Spalten Prismen in einer Separations- und einer Feldlinsenmaske bzw. in einer kombinierten Separations/Feldlinsenmaske angeordnet. Die aus den rechten und linken Spalten austretenden Strahlenbündel werden mit den Prismen der Separationsmaske horizontal getrennt und entsprechend dem Augenabstand richtungsmäßig um etwa 6° gespreizt, wobei die rechten und die linken Strahlenbündel jeweils untereinander parallel sind. Die Prismen der Feldlinsenmaske fokussieren die rechten Strahlenbündel auf das rechte Auge und die linken auf das linke Auge. Mit beiden hintereinander liegenden Masken bzw. mit der kombinierten Separations/Feldlinsenmaske entstehen, ausgehend vom Display, zwei Lichtkeulen, in deren Spitzen die Augen des Betrachters liegen.

Für den Betrachter ergeben sich Standorte, in denen das rechte Auge nur die rechten Spalten und das linke nur die linken sieht. Diese Standorte wiederholen sich periodisch bei seitlicher Bewegung des Betrachters vor dem Bildschirm. In diesen idealen Betracherpositionen sind die Spalten in voller Breite und seitenrichtig seinen Augen zugeordnet. Bei einer kleinen seitlichen Bewegung verringert sich bezüglich der Betrachterposition die Deckungsgleichheit von Spalten und optischen Mitteln. Das rechte Auge erhält z. B. nur noch 80 % der Informationen des rechten Halbbildes und dafür aber 20 % vom linken. Es kommt zu einem Übersprechen zwischen den beiden Bildkanälen, sobald sich der Betrachter bewegt. Der Stereokontrast verringert sich. Die Anteile der Fehlinformationen wachsen bei weiterer seitlicher Bewegung des Betrachters an bis es zu einer vollständigen Informationsumkehr kommt, d. h., dem linken Auge sind die Informationen für das rechte zugeordnet und umgekehrt. Der Betrachter sieht ein tiefenverkehrtes Bild (Pseudoskopie). Bei noch weiterer seitlicher Bewegung steigen die seitenrichtigen Informationsinhalte bis zu einer wieder hundertprozentig richtigen Zuordnung an.

Es ist bereits bekannt, die seitliche Position des Betrachters in bezug auf den Bildschirm zu erfassen. Beispielsweise kann die Kopfposition und damit die Augenposition in Bezug auf den Bildschirm mit einem kommerziellen Infrarot-Kamera (z. B. DynaSight von Origin Instruments Corp., Grand Prairie, TX, USA) ermittelt werden.

In Abhängigkeit von der Positionsänderung wird beim Linsenrastersystem die Linsenmaske und beim Barriereverfahren das Barrieregitter mechanisch nachgestellt. Bei anderen Lösungen wird das Licht der Lichtquellen seitlich nachgeführt oder es wird der Bildschirm um eine vertikale Achse gedreht. Allgemein kann man sagen, die stereoskopischen Halbbilder bzw. die optischen Mittel zur Sicht auf die Halbbilder werden der seitlichen Bewegung des Betrachters nachgerührt.

Es ist auch bereits bekannt, die Bildinhalte in den Positionen, in denen der Betrachter ein tiefenverkehrtes Bild (Pseudoskopie) erhält, elektronisch umzuschalten.

Die mechanischen Nachführungen erfordern zusätzliche Antriebsmechanismen mit zusätzlichen Aufwand bei der Herstellung, Wartung und im Bauvolumen. Außerdem sind sie, gemessen an elektronischen Schaltzeiten, relativ träge. Die Schwierigkeiten steigen mit wachsendem Verstellweg.

Die elektronische Umschaltung der Bildinhalte kann programmtechnisch, d. h., ohne zusätzlichen Hardwareaufwand, erfolgen. Der Betrachter muß aber weiterhin in den idealen Sichtpositionen ausharren; nur deren Zahl hat sich verdoppelt. Zwischen den idealen Sichtpositionen kommt es weiterhin zu stereoskopischem Übersprechen mit starker Beeinträchtigung der Bildgüte.

Das wirkt sich besonders stark beim Einsatz der heute üblichen Farbdisplays aus. Zwischen den Idealpositionen sieht der Betrachter beispielsweise statt der dem rechten Halbbild entsprechenden roten Anteile die des linken Halbbilds und diese bilden zusammen mit den noch zutreffenden grünen und blauen Farbanteilen erheblich gestörte Stereobilder. In dem Beispiel sind die Stereobilder für den grünen und blauen Farbanteil richtig. Für den roten Farbanteil erhält man aber bereits ein invertiertes Stereobild mit der zugehörigen Tiefenumkehr.

Das Linsenrastersystem verstärkt diesen Effekt in besonderer Weise. Um dem zu begegnen, wurde das Display bereits um 90° gedreht. Die Farbsubpixel jedes Pixels liegen dadurch untereinander, so daß bei einer Veränderung des Beobachterstandortes die ursprünglichen Farbwerte prozentual erhalten bleiben. Allerdings erfordert diese Drehung ein neues Design für das Display.

Aufgabe der Erfindung ist es, bei Verwendung eines Flachdisplays mit jeweils n in einem Pixel horizontal nebeneinander liegenden und in einer Zeile periodisch aufeinanderfolgenden Farbsubpixeln die stereoskopischen Halbbilder einer seitlichen Änderungen der Betrachterposition so nachzuführen, daß die in den idealen Betrachterpositionenen vorhandene hohe stereoskopische Bildqualität weitgehend beibehalten wird.

Diese Aufgabe wird erfindungsgemäß dadurch gelöst, daß durch eine farbsubpixelweise Verlegung der Intensitäten der Farbsubpixel an horizontal benachbarte Farbsubpixel auf dem Display die Bildpunkte proportional zur Bewegung des Betrachters seitlich verschoben werden.

Das Verfahren kann erfolgreich realisiert werden, wenn in einer ersten Variante, wie bisher bereits bekannt, pro Bildpunkt n Farbsubpixel zur Verfügung stehen. Die Zahl der idealen Betrachterpositionen wird auf sechs je Periode der idealen Standortpositionen ohne Bildnachführung erhöht. Das stereoskopische Übersprechen zwischen den Idealpositionen wird durch eine vorzugsweise farbsubpixelweise Verlegung der Intensitäten in Zwischenschritten auf eine sehr kleine Größe begrenzt.

Ein ähnlicher Effekt wird bei dieser ersten Variante in einer weiteren Ausführung dadurch erreicht, daß die erfindungsgemäße programmtechnische farbsubpixelweise Verschiebung der Bildinhalte auf dem unbewegten Bildschirm mit der an sich bereits bekannten seitlichen Verstellung des Displays oder des Lichts der Lichtquellen oder der optischen Mittel (z. B. eines Barrieregitter oder von Zylinderlinsen) kombiniert wird. Der Verstellweg kann dabei sehr klein gehalten werden, da nur auf die volle Breite eines Farbsubpixels ausgeglichen werden muß. Damit wird in jeder Betrachterposition die ideale Bildgüte erreicht.

Eine besondere Bedeutung erlangt das erfindungsgemäße Verfahren, wenn in einer zweiten Variante pro Bildpunkt n+1 nebeneinander liegende Farbsubpixel angesteuert werden, wobei die die Intensitäten der beiden am Rand jeweils eines Bildpunktes liegenden gleichfarbigen Farbsubpixel gleich groß sind und vorzugsweise der Intensität dieser Farbe im Bildpunkt entsprechen und die horizontale Breite des jeweils sichtbaren Teils eines Bildpunktes n Farbsubpixelbreiten entspricht.

Geht man von einem bisher gefertigten üblichen Flachdisplay mit n nebeneinander liegenden Farbsubpixeln je Pixel aus, so sind die Bildpunktc bzw. -spalten um jeweils eine Farbsubpixelbreite breiter als die Pixel bzw. -spalten.

In einer vorzugsweisen Ausführung mit einem üblichen Display, bei dem in einer Zeile jeweils drei Farbsubpixel in den Farben ROT (R), GRÜN (G) und BLAU (B) periodisch aufeinander folgen, werden für einen Bildpunkt jeweils vier Farbsubpixel angesteuert. In der Displayzeile bilden die Farbsubpixel in den Sequenzen RGBR, GBRG, BRGB usw. die Bildpunkte.

Der Betrachter sieht in einer Idealposition vor dem Bildschirm mit dem rechten bzw. linken Auge von den n+1 Farbsubpixeln jedes Bildpunktes die beiden am Rand dieses Bildpunktes liegenden Farbsubpixel jeweils zur Hälfte und die dazwischenliegenden n-1 Farbsubpixel in voller Breite. Bei kleineren seitlichen Änderungen seiner Betrachterpostion sieht er jeweils von einem der beiden Randsubpixel nur noch einen kleineren Teil, z. B. nur noch 20 % der Farbsubpixelbreite, und dafür aber 80 % der des anderen Randsubpixels. In der Summe bleibt die Intensität für den Farbanteil der Randsubpixel im Pixel vollständig erhalten. Der Betrachter sieht weiterhin ein tiefengerechtes und seiten- und farbrichtiges Stereobild.

Vergrößert sich der Abstand des Betrachters vom Bildschirm, so verkleinert sich der Farbanteil der Randsubpixel. Die Verringerung beträgt gewöhnlich aber nur wenige Prozent, so daß der Bildeindruck kaum verschlechtert wird.

Die erfindungsgemäße Anordnung "toleriert" demzufolge geringfügige seitliche Bewegungen und größere Abstandsänderungen des Betrachters vom Bildschirm ohne merkbare Einbußen an Bildqualität.

Bei größeren seitlichen Bewegungen des Betrachters werden erfindungsgemäß die Bildpunkte in den Zeilen um ein oder mehrere Farbsubpixelbreiten seitlich verschoben und die den Bildpunkten zugehörigen Intensitätswerte der Farben in den Farbsubpixeln den in der Zeile seitlich benachbarten n+1 Farbsubpixeln zugeordnet, die sich an der neuen Position des Bildpunktes befinden. Die Größe der seitlichen Verschiebung der Bildpunkte entspricht in etwa der seitlichen Positionsänderung des Betrachters. Während die Pixel und Farbsubpixel an ihre Position im Display gebunden sind, verschieben sich die Bildpunkte entlang der Displayzeile entsprechend der seitlichen Bewegung des Betrachters. In Verbindung mit der "Toleranz" des Systems (theoretisch ist eine Abweichung in der Größe von maximal einer Farbsubpixelbreite zulässig) sieht der Betrachter das Bild ständig in praktisch gleich guter Qualität. Während der Bewegung des Betrachters kann dieselbe Information gezeigt werden. Die Information kann sich aber auch mit dem seitlichen Abstand des Betrachters ändern. Der Betrachter sieht zum Beispiel mehr von der rechten oder linken Seite eines Gegenstands.

Bei einer vorzugsweisen Ausführung der Anordnung mit einem Barrieregitter ist die Breite der Gitterlinien des Barrieregitters größer als die Breite der Spalte zwischen den Gitterlinien des Barrieregitters, wobei die Gitterlimen im Strahlengang zu den Augen des Betrachters n+1 Farbsubpixelbreiten abdecken und die Spalten zwischen den Gitterlinien jeweils für n Farbsubpixelbreiten geöffnet sind.

In den Unteransprüchen und Ausführungsbeispielen wird gezeigt, daß es ebenso möglich ist, mit den erfindungsgemäßen Merkmalen eine Prismen- oder Lentikularmaskenanordnung aufzubauen.

### Ausführungsbeispiele

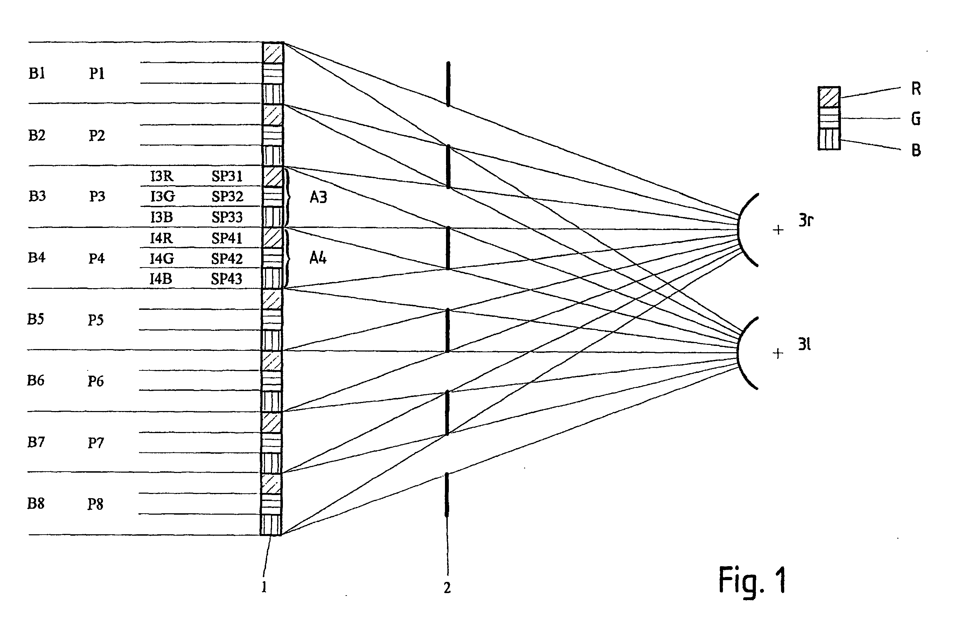

Die Erfindung wird für die erste Variante (n Farbsubpixel pro Bildpunkt) in den Fig. 1 bis 4 und für die zweite Variante (n+1 Farbsubpixel pro Bildpunkt) in den übrigen Figuren dargestellt. Für beide Varianten werden die verschiedenen Ausführungen zunächst anhand einer Ausrüstung für ein Barriereverfahren erläutert. Die letzten beiden Figuren zeigen die problemlose Übertragung auf Ausrüstungen für ein Linsenraster- oder ein Prismenverfahren. Jeweils im Horizontalschnitt zeigen die Zeichnungen die Intensitätswerte an den Farbsubpixeln bei verschiedenen Betrachterpositionen:
- Fig. 1: der Betrachter befindet sich in einer idealen Position vor dem Bildschirm,
- Fig. 2: die Betrachterposition hat sich seitlich um den Weg a1 geändert und
- Fig. 3: die Betrachterposition hat sich seitlich um den Weg a2 geändert,
- Fig. 4: die Betrachterposition hat sich seitlich um denselben Weg a2 wie in Fig. 3 geändert; zusätzlich zur Änderung der Intensitätswerte erfolgt eine seitliche Verstellung des Barrieregitters um den Weg s,
- Fig. 5: der Betrachter befindet sich in einer idealen Position vor dem Bildschirm,
- Fig. 6: die Betrachterposition hat sich seitlich um den Weg a' geändert,
- Fig. 7: die Betrachterposition hat sich seitlich um den Weg a" geändert,
- Fig. 8: der Betrachter befindet sich an drei verschiedenen seitlichen Positionen,
- Fig. 9: die Entfernung des Betrachters vom Bildschirm hat sich um den Weg b geändert,
- Fig. 10: eine Anordnung mit Prismenmaske; der Betrachter befindet sich in einer idealen Position vor dem Bildschirm,
- Fig. 11: eine Anordnung mit Lentikularmaske; der Betrachter befindet sich in einer idealen Position vor dem Bildschirm.

### Erste Variante (n Farbsubpixel pro Bildpunkt, Figuren 1 bis 4)

In den Zeichnungen ist ein Ausschnitt eines Displays 1, eines Barrieregitters 2 sowie das rechte bzw. linke Auge 3r bzw. 31 eines Betrachters in idealer Position dargestellt. Die seitliche Positionsänderung a1 bzw. a2 wird mittels Positionsgeber ermittelt. Hierzu ist dem Display 1 ein DynaSight-Gerät zugeordnet und an der Stim des Betrachters das Target befestigt. Gerät und Target sind nicht dargestellt.

In der Idealposition gemäß Fig. 1 sieht der Betrachter die stereoskopischen Halbbilder vollständig und seitenrichtig. Es ist dargestellt, wie das rechte Auge 3r durch die Barrierelücken jeweils die Pixel P1, P3, P5 und P7 und das linke Auge 31 die Pixel P2, P4, P6 und P8 in voller Breite sieht. Die ungeradzahligen Pixel enthalten Informationen aus dem rechten Halbbild und die geradzahligen solche aus dem linken Halbbild. Senkrecht untereinander bilden die ungeradzahligen Pixel die rechten und die geradzahligen Pixel die linken Spalten mit den Informationen aus dem rechten bzw. linken Halbbild. Eine benachbarte rechte und linke Spalte bilden dabei ein Spaltenpaar.

Jedes Pixel besteht aus n=3 Farbsubpixeln, den Subpixeln für die Farben Rot R, Grün G und Blau B, z. B. das Pixel 3 aus den Farbsubpixeln SP31 (ein rotes Subpixel), SP32 (Grün) und SP 33 (Blau). Der Intensitätswert der Farbsubpixel kann elektronisch eingestellt werden. Die elektronischen Mittel hierfür sind bekannt und nicht näher dargestellt. Programmtechnisch geschieht dies, indem die Intensitätswerte I fiir jedes Farbsubpixel festgelegt werden, z. B. im Bildpunkt B3: I3R an SP31, I3G an SP32 und I3B an SP33. Die Pixel P und die Farbsubpixel SP behalten ihren Platz auf dem Display 1. Das Display 1, die Pixel P und das Barrieregitter 2 ändern ihre Positionen nicht. Mit einer seitlichen Bewegung ändern sich die Intensitätswerte.

Das rechte Auge 3r sieht durch die Barrierelücke im Ausschnitt A3 alle Farbsubpixel SP31 bis SP33 des Pixels P3 und das linke Auge 31 sieht durch seine Barrierelücke im Ausschnitt A4 alle Farbsubpixel SP41 bis SP43 des Pixels P4. Die Positionen der Pixel P und der Bildpunkte B befinden sich in Übereinstimmung. Der Betrachter erhält ein tiefen- und farbgerechtes Stereobild ohne Übersprechen.

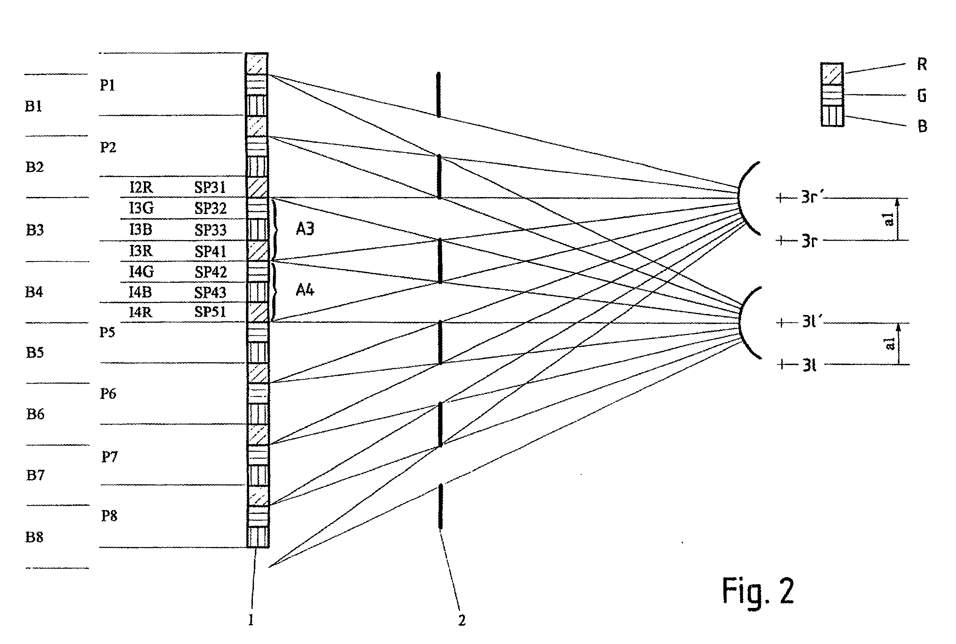

In Fig. 2 hat sich der Betrachter seitlich zum Bildschirm um den Weg a1 bewegt. Das Display 1 mit allen Pixeln und Subpixeln und das Barrieregitter haben ihre Position nicht verändert. Das rechte Auge 3r' sieht jetzt im Ausschnitt A3 die Farbsubpixel SP32, SP33 und anstelle von SP31 das Farbsubpixel SP41, dem nach Fig. 1 noch der Intensitätswert I4R (eine Information aus dem linken Halbbild) vorgegeben ist. Erfindungsgemäß wird mit der Feststellung der seitlichen Änderung a1 dem Farbsubpixel SP41 der Intensitätswert I3R mit der Information aus dem rechten Halbbild vorgegeben, der zuvor in Fig. 1 dem Farbsubpixel SP31 zugeordnet war. Entsprechend ist letzterem der Intensitätswert I2R und dem Farbsubpixel SP51 der Intensitätswert I4R zugeordnet. Die Verschiebung betrifft die Intensitätswerte aller roten Subpixelspalten, hier um eine Pixelbreite nach links, aus der Sicht des Betrachters. Die Bildpunkte B haben sich um eine Farbsubpixelbreite verschoben. Sie enthalten alle ursprünglichen Informationen.

Obwohl sich der Betrachter in Fig. 2 nicht mehr in einer Idealposition befindet, sieht er durch die programmtechnisch gesteuerte Verschiebung der Intensitätswerte der roten Subpixel ein tiefengerechtes und seitenrichtiges Stereobild.

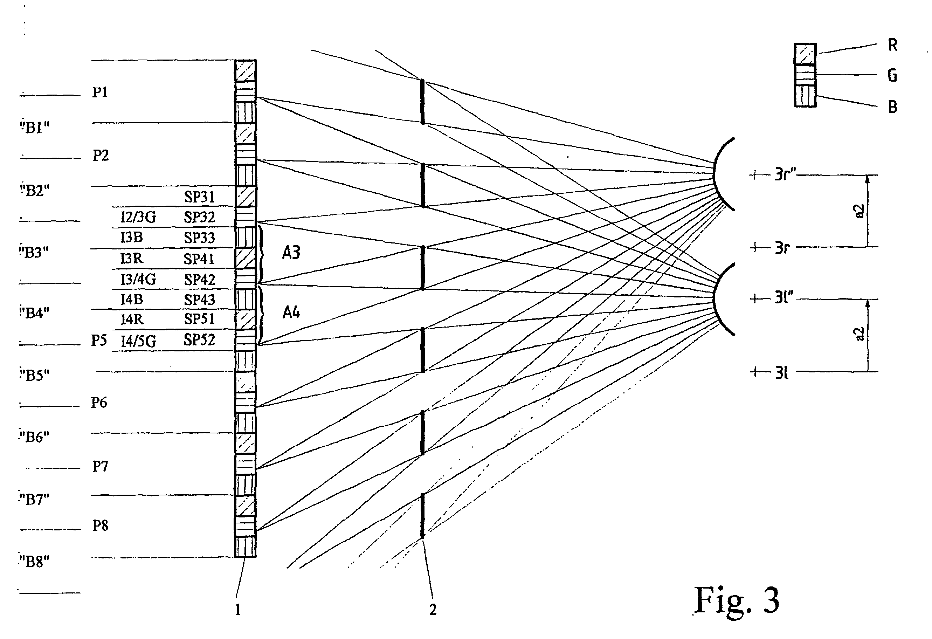

In Fig. 3 hat sich der Betrachter seitlich zum Bildschirm um den Weg a2 bewegt. Das Display 1 mit allen Pixeln und Farbsubpixeln und das Barrieregitter haben ihre Position wiederum nicht verändert. Das rechte Auge 3r" sieht jetzt im Ausschnitt A3 einen Teil des Farbsubpixels SP32, die Farbsubpixel SP33 und SP41 sowie einen Teil des Farbsubpixels SP42. Am Farbsubpixel SP41 liegt die Intensität I3R (die in Fig. 1 an SP31 lag). Die beiden am Rand des Ausschnitts A3 liegenden Farbsubpixel SP32 und SP42 erhalten die Mischungsintensitäten I2/3G bzw. I3/4G. Für das Beispiel wird angenommen, daß SP32 schon zu 70 % vom linken Auge und noch 30 % vom rechten Auge gesehen wird. Entsprechend setzt sich die Intensität I2/3G aus 70 % der Intensität von I2G (in Fig. 1 an SP22 liegend) und 30 % der I3G, d. h., im Verhältnis der sichtbaren Teilbreiten, zusammen. Die Bildpunkte "B" haben sich um 1,7 Farbsubpixelbreiten gegenüber ihrer Position in Fig. 1 verschoben. Da sie in den Zwischenpositionen in ihrem Informationsgehalt nicht ganz exakt der Ausgangslage in Fig. 1 entsprechen, wurden sie in Anführungszeichen gesetzt. Es wird aber auch in den Zwischenschritten immer noch eine hohe Bildqualität erreicht.

In einer anderen, vereinfachten Ausführung wird eine Mischintensität von 50 % zu 50 % für alle am Rande liegenden und für ein einzelnes Auge nicht voll sichtbaren Farbsubpixel vorgegeben. Hier also würde sich die Intensität des Farbsubpixels SP32 aus 50 % der Intensität I2G und 50 % der Intensität I3G zusammensetzen. Dadurch entstehen je Periode der idealen Standortpositionen ohne Bildnachführung 12 ideale Positionen für den Betrachter.

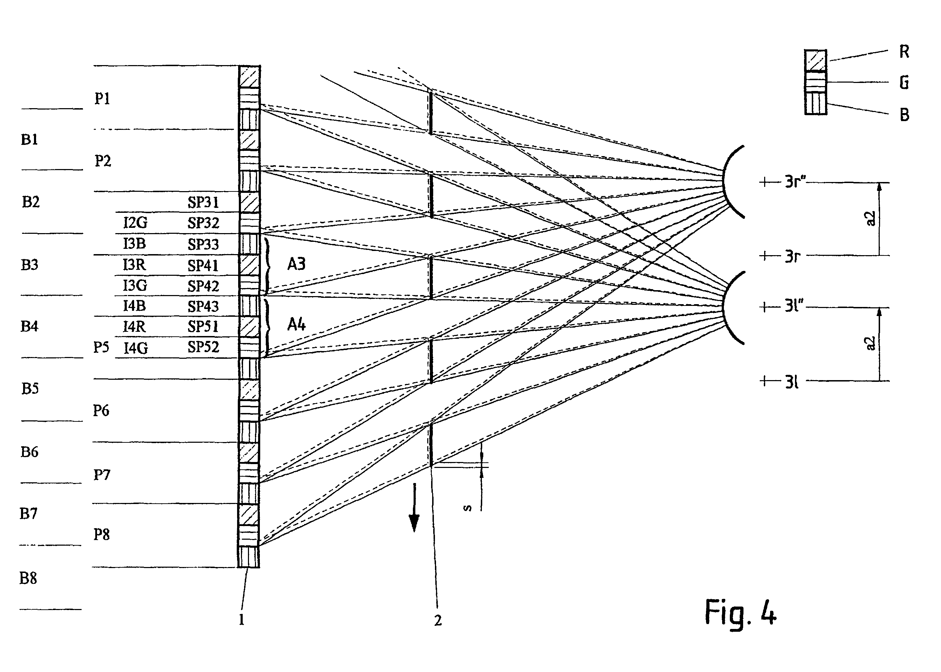

In Fig. 4 wird von derselben seitlichen Bewegung des Betrachters wie in Fig. 3 ausgegangen. Die gestrichelten Linien entsprechen den Verhältnissen in Fig. 3. Das rechte Auge sieht ohne Korrektur wieder nur 30 % von SP32. Gegenüber Fig. 3 erfolgt zusätzlich zu den programmtechnischen Verschiebungen der Intensitätswerte eine seitliche mechanische Verstellung des Barrieregitters 2 um den Weg s in die mit dem Pfeil angegebene Richtung. Die neue Lage des Barrieregitters und der Bildausschnitte ist mit Vollinien dargestellt. Der Weg s ist so bemessen, daß das linke Auge das Farbsubpixel SP32 in voller Breite sieht. Unter Beachtung der Strahlensätze entspricht der Weg s dem Ausgleich zur vollen Breite des Farbsubpixels bzw. der nicht mehr sichtbaren Teilbreite des Farbsubpixels SP32. Die Intensitätswerte werden programmtechnisch wie in Fig. 2 verändert. Die Bildpunkte wurden um zwei Farbsubpixelbreiten verschoben. Bei exakt realisierbaren seitlichen Verstellungen wird stets die ideale Bildgüte für alle Standorte des Betrachters erreicht.

Das Barrieregitter 2 hätte auch in die andere Richtung, entgegengesetzt der eingezeichneten Pfeilrichtung so verstellt werden können, daß das rechte Auge das Farbsubpixel SP32 sieht.

Im Beispiel wurden kleine Änderungen a der seitlichen Bewegung angenommen, um die Veränderungen anschaulich zu zeigen. Es versteht sich, daß die Verschiebung der Intensitätswerte I über mehrere horizontal benachbarte Pixel proportional zu einer größeren seitlichen Änderungen des Betrachters erfolgen kann. Hierbei würde z. B. an SP31 in Fig. 2 nicht I2R, sondern I(2+k)R anliegen, wobei k einer größeren Zahl von Pixeln entspricht.

Die am Barriereverfahren gezeigten erfindungsgemäßen Änderungen sind auf das Linsenrastersystem bzw. ähnliche Systeme und Verfahren übertragbar.

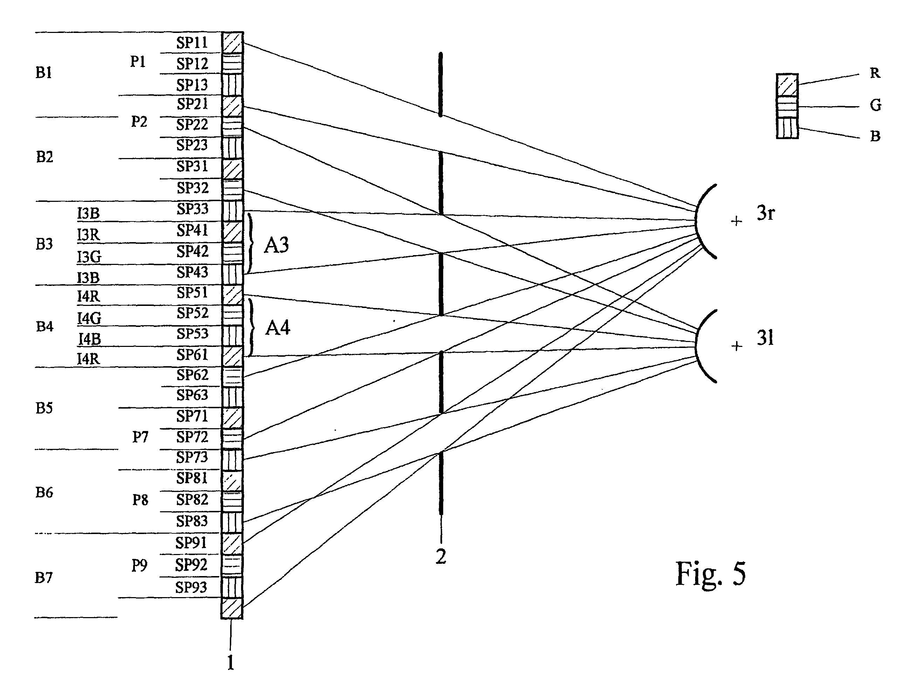

### Zweite Variante (n+1 Farbsubpixel pro Bildpunkt, Figuren 5 bis 11)

Die Beispiele werden an einem Display 1 erläutert, bei dem in einer Zeile jeweils drei Subpixel SP in den Farben ROT (R), GRÜN (G) und BLAU (B) nebeneinander liegen und periodisch aufeinander folgen. Erfindungsgemäß werden die Bildpunkte B nicht mehr wie bisher aus n=3, sondern aus n+1, also vier Farbsubpixeln SP, gebildet.

In dem Display 1 sind die Pixel P wieder in einer Matrix angeordnet. In den dargestellten Zeilenausschnitten des Displays 1 werden sie wie in den Figuren 1 bis 4 fortlaufend mit P1, P2 usw. bezeichnet. Die zugehörigen Farbsubpixel SP sind ebenfalls in Dreiergruppen numeriert, z. B. die Farbsubpixel SP des Pixels P4 mit SP41, SP42 und SP43. Mit der Numerierung ist der Ort des Farbsubpixels SP in der Displayzeile festgelegt. Das SP41 befindet sich in allen Figuren an derselben Stelle der betrachteten Zeile des Displays 1. Im Beispiel ist das SP41 wieder ein R-Farbsubpixel. Die Intensität I der roten Farbe wird programmtechnisch entsprechend dem Bildpunkt vorgegeben. In Fig. 5 gehört das Farbsubpixel SP41 zum Bildpunkt B3 und hat den Intensitätswert I3R (I für Intensität, 3 für den Bildpunkt B3 und R fiir das R-Farbsubpixel). Der Bildausschnitt A3 ist in Fig. 5 der für das rechte Auge 3r des Betrachters sichtbare Teil des Bildpunktes B3. Entsprechend ist A4 der für das linke Auge 31 des Betrachters sichtbare Teil des Bildpunktes B4. Jeder Bildpunkt B umfaßt vier Farbsubpixel SP. In Fig. 5 wird der Bildpunkt B3 von den Farbsubpixeln SP33, SP41, SP42 und SP43 gebildet. Wie in den weiteren Figuren gezeigt wird, ist die Zuordnung der Bildpunkte B zu den Farbsubpixeln SP nicht fest. Der Bildpunkt B kann entlang der Zeile verschoben werden. Je nach Verschiebung des Bildpunktes B innerhalb der Zeile entsteht seine Zuordnung zu den an seiner neuen Position befindlichen vier Farbsubpixeln SP.

In den Figuren 5 bis 9 ist dem Display 1 jeweils ein Barrieregitter 2 vorgeordnet. Die Breite seiner Gitterlinien ist größer als die Breite der Spalte zwischen den Gitterlinien. Für die Augen 3 des Betrachters ist jeweils der Blick auf 3 Farbsubpixelbreiten freigegeben, während dazwischen immer vier Farbsubpixelbreiten verdeckt sind. In Fig. 5 sind in den Bildausschnitten A3 und A4 die am Rande der Bildpunkte B3 und B4 liegenden Farbsubpixel SP33 und SP43 bzw. SP51 und SP61 jeweils zur Hälfte und die dazwischen liegenden Farbsubpixel SP41 und SP 42 bzw. SP52 und SP53 in ganzer Breite zu sehen.

Der Betrachter sieht mit seinem rechten Auge 3r durch die Barrierespalte jeweils auf die Bildpunkte B1, B3, B5 und B7 und und mit seinem linken Auge 31 auf die Bildpunkte B2, B4 und B6. Die ungeradzahligen Bildpunkte enthalten Informationen aus dem rechten Halbbild und die geradzahligen solche aus dem linken Halbbild. Senkrecht untereinander bilden die ungeradzahligen Bildpunkte die rechten und die geradzahligen Bildpunkte die linken Spalten mit den Informationen aus dem rechten bzw. linken Halbbild. Eine benachbarte rechte und linke Spalte bilden dabei ein Spaltenpaar.

In der Ausführung nach Figur 5 sind den am Rand eines Bildpunktes liegenden Farbsubpixeln gleiche Intensitätswerte I zugeordnet, z. B. I3B für den blauen Farbanteil im Bildpunkt B3 bzw. I4R für den roten Farbanteil im Bildpunkt B4. Die Intensitätswerte I sind jeweils gleich groß und entsprechen jeder für sich dem Intensitätswert I dieser Farbe im Bildpunkt B, als würde die Farbe des Bildpunktes B, wie bisher üblich, nur aus drei Farbsubpixeln gebildet werden. Da die Randsubpixel nur jeweils zur Hälfte gesehen werden, enthalten die Bildausschnitte A3 und A4 in der Summe des sichtbaren Teils aller jeweils vier Farbsubpixel SP den zutreffenden blauen bzw. roten Farbanteil.

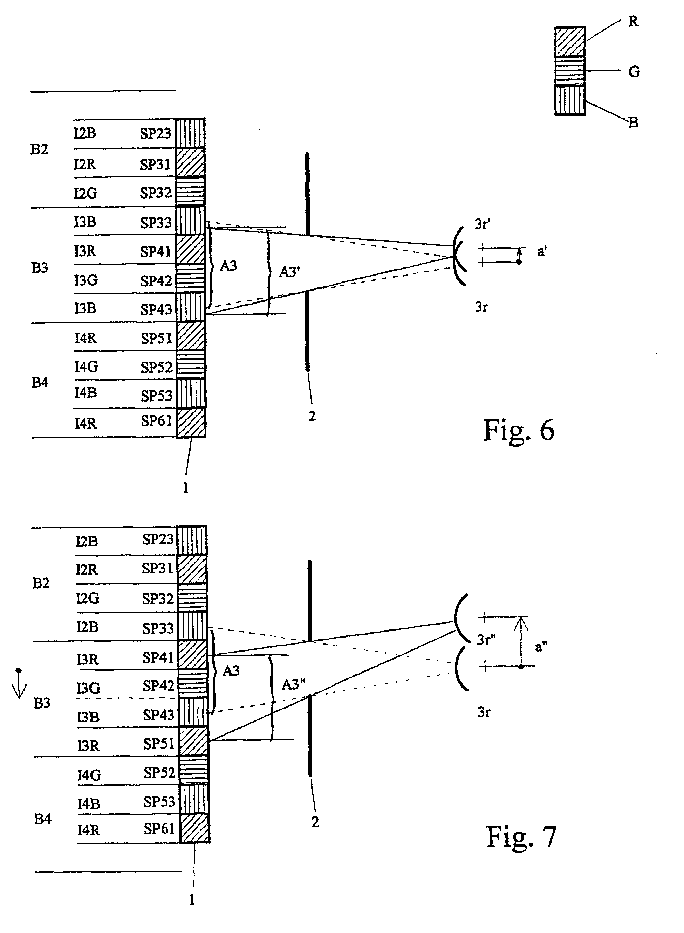

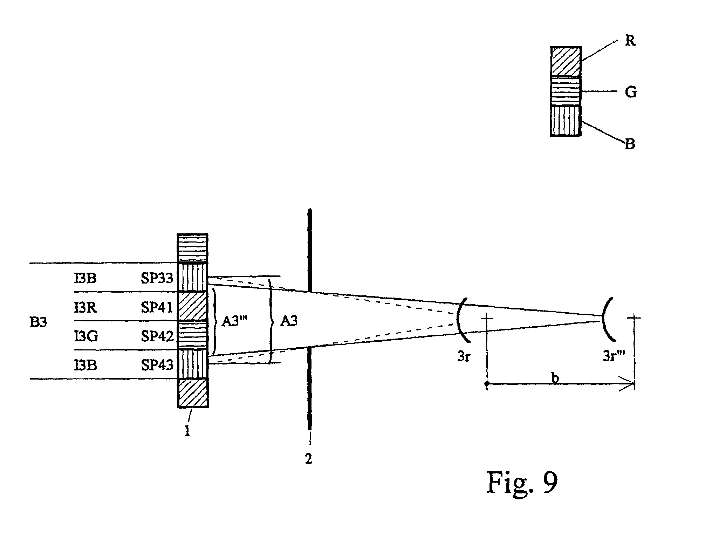

Ein Vorzug dieser Ausführung ist aus den Figuren 6 und 9 ersichtlich.

In Figur 6 hat der Betrachter seine Position gegenüber der in Figur 5 (gestrichelte Linien) um einen kleinen Weg a' zur Seite bewegt. Das rechte Auge sieht in der neuen Position 3r' den Bildausschnitt A3' (Vollinien). Es sieht die Farbsubpixel SP41 und SP43 wie bisher in voller Breite, SP33 nur noch zu etwa 25% und SP43 zu etwa 75%. In der Summe der sichtbaren Teile der Randpixel SP33 und SP43 werden wieder 100% des durch den Intensitätswert I3B vorgegebenen blauen Farbanteils gesehen. Maximal kann sich der Betrachter um jeweils 1/8 des Augenabstands nach rechts oder links bewegen, ohne daß sich die Qualität des Bildes ändert.

In Figur 9 hat sich der Betrachter um den Weg b vom Bildschirm entfernt. Dargestellt ist wieder der Bildpunkt 3 bzw. Ausschnitt A3 aus Fig. 1 für das rechte Auge 3r des Betrachters. In der neuen Position 3r"' wird der Bildausschnitt A3"' gesehen, der kleiner als A3 ist. Das bedeutet, daß der Farbanteil der Randsubpixel SP33 und SP43 zusammen kleiner 100% ist. Das könnte durch Veränderung des Intensitätswertes I3B ausgeglichen werden. Praktisch verringert sich für die Standardausführungen der Breitenanteil der Randsubpixel im Bildausschnitt nur um wenige Prozent, so daß der Betrachter weiterhin ein in etwa gleich gutes Bild sieht.

Die Figuren 6 und 9 zeigen die "Toleranz" des Systems bei geringfügigen seitlichen Bewegungen und größeren Abstandsänderungen des Betrachters vom Bildschirm.

In Fig. 7 hat sich der Betrachter seitlich zum Bildschirm um den Weg a" in der angegebenen Pfeilrichtung (zum oberen Zeichnungsrand hin) bewegt. In der Position 3r" sieht das rechte Auge jetzt im Ausschnitt A3" die Farbsubpixel SP41, SP42, SP43 und SP51. Ohne Änderung der Intensitätswerte hätte SP51 im Bildpunkt B3 einen falschen Intensitätswert. Nach dem erfindungsgemäßen Verfahren werden mit der Feststellung der seitlichen Änderung a" (z. B. mittels Head Finding) die Intensitätswerte für jede Farbe bei Beibehaltung ihrer Zugehörigkeit zu den Bildpunkten den benachbarten Farbsubpixeln entsprechender Farben zugeordnet. Den beiden jetzt roten Randsubpixeln im Bildausschnitt A3" ist der Intensitätswert I3R zugeordnet. SP42 wird der Intensitätswert I3G und SP43 I3B zugewiesen. Während die Pixel P und die Farbsubpixel SP an ihrem Platz in der Displayzeile verblieben, wurde der Bildpunkt B3 um eine Farbsubpixelbreite in der angegebenen Pfeilrichtung (zum unteren Zeichnungsrand hin) verschoben und den am neuen Ort befindlichen vier Farbsubpixeln zugeordnet.

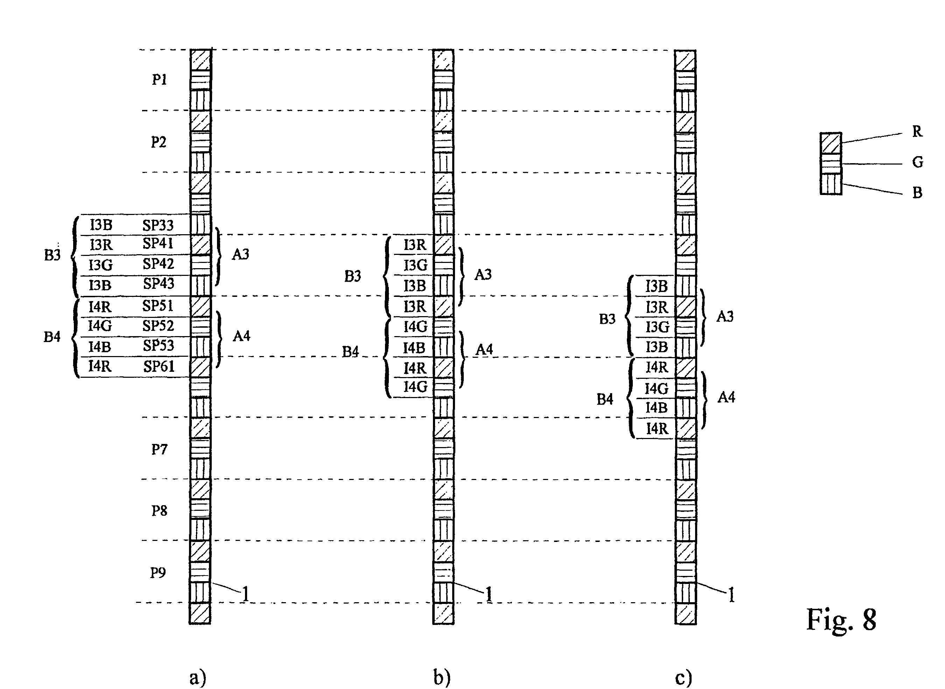

In Figur 8 wird die Verschiebung der Bildpunkte B zu den Pixeln P bzw. die Zuordnung der Intensitätswerte I zu den Farbsubpixeln SP in 3 Stufen gezeigt. In Fig. 8a) hat der Betrachter eine Position gemäß Figur 5. Die Betrachterposition in Fig. 8 b) entspricht der nach Fig. 7. In Fig. 8c) hat sich der Betrachter seitlich noch weiter bewegt. Während die Farbsubpixel SP und Pixel P in der Figur (wie im Display) ihre Position behalten, ändert sich die Zuordnung der Intensitätswerte I zu den Farbsubpixeln SP gemäß der Verschiebung der Bildpunkte, wobei der Informationsgehalt der Bildausschnitte A unverändert bleibt.

Die seitliche Verschiebung der Informationsinhalte erfolgt gleichzeitig für den gesamten Bildschirm, so daß der Betrachter trotz seitlicher Bewegung dasselbe Bild sieht. Der besondere Vorzug der Lösung liegt darin, daß die Verstellung ohne Einbuße an Qualität stufenweise in der Breite der Farbsubpixel SP erfolgen kann und das Bild trotzdem kontinuierlich gesehen wird.

Obwohl sich der Betrachter in Fig. 7 bzw. 8b oder 8c) nicht mehr in der Position von Fig. 5 befindet, sieht er durch die programmtechnisch gesteuerte Verschiebung der Zuordnung der Intensitätswerte I zu den Farbsubpixeln SP ein tiefengerechtes und seitenrichtiges Stereobild. Es ist so, als hätte er seine Idealposition aus Fig. 5 beibehalten.

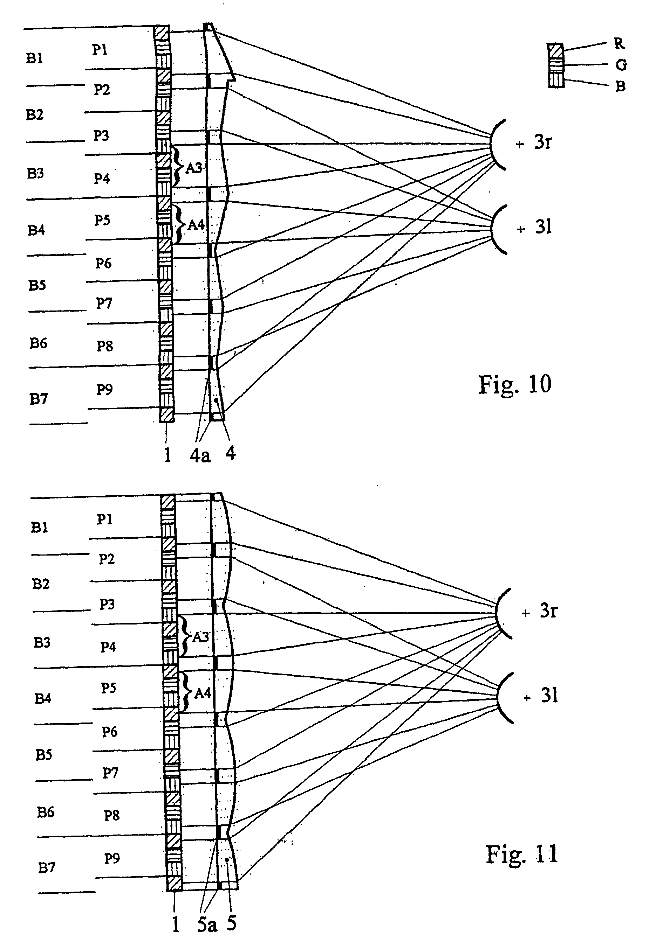

In Fig. 10 ist dem Display 1 eine Prismenmaske 4 vorgeordnet. Sie spreizt die Strahlenbündel auf den Augenabstand auf und fokussiert sie in die Augen 3r und 31. Die Breite der Prismen der Prismenmaske 4 entspricht der Breite von vier Farbsubpixeln. Auf der dem Display 1 zugewandten Seite der Prismenmaske 4 ist ein Abblendgitter mit vertikalen Gitterlinien 4a vorgesehen. Die Breite der Gitterlinien 4a entspricht jeweils einer Farbsubpixelbreite. Die Gitterlinien 4a decken jeweils am Rand der Prismen eine halbe Farbsubpixelbreite ab, d. h. die Prismen sind jeweils in der Mitte auf einer Breite von drei Farbsubpixelbreiten lichtdurchlässig und an den Rändern lichtundurchlässig.

In Fig. 11 ist dem Display 1 eine Lentikularmaske 5 vorgeordnet. Sie spreizt die Strahlenbündel auf den Augenabstand und fokussiert sie in die Augen 3r und 31. Die Breite der zylindrischen Linsen der Lentikularmaske 5 entspricht der Breite von acht Farbsubpixeln. Auf der dem Display 1 zugewandten Seite der Lentikularmaske 5 ist ein Abblendgitter mit vertikalen Gitterlinien 5a vorgesehen. Die Breite der Gitterlinien 5a entspricht jeweils einer Farbsubpixelbreite. Die Gitterlinien 5a decken jeweils am Rand der Linsen eine halbe Farbsubpixelbreite und in der Mitte jeder Linse eine Farbsubpixelbreite ab.

Die Abblendgitter sind in den beiden Beispielen in die Prismen- bzw. Lentikularmaske 4 bzw. 5 eingearbeitet.

## Patentansprüche

1. Verfahren zur dreidimensionalen Darstellung von Information, bei dem mittels eines Flachdisplays mit jeweils n in einem Pixel horizontal nebeneinander liegenden und in einer Zeile periodisch aufeinanderfolgenden Farbsubpixeln zwei stereoskopische Halbbilder, je eines für das rechte bzw. linke Auge des Betrachters, simultan erzeugt und in eine Vielzahl von benachbarten, abwechselnd aufeinanderfolgenden rechten und linken senkrechten Spalten mit jeweils einem Bildpunkt pro Zeile aufgelöst werden, die Spalten bzw. die Bild-Informationen der Spalten mit optischen Mitteln dem rechten bzw. linken Auge zugeordnet werden sowie der seitliche Winkel der Augenposition des Betrachters zur Normalen auf den Monitor gemessen wird und die Haibbilder der seitlichen Bewegung eines Betrachters nachgeführt werden, **gekennzeichnet dadurch, daß** bei einer seitlichen Bewegung des Betrachters die Bildpunkte (B) und mit ihnen die Spalten durch eine farbsubpixelweise Verlegung der Intensitäten (I) der Farbsubpixel (SP) an horizontal benachbarte Farbsubpixel (SP) auf dem Display (1) seitlich verschoben werden und ihre Verschiebung etwa proportional zur seitlichen Bewegung des Betrachters ist.

2. Verfahren nach Anspruch 1, **gekennzeichnet dadurch, daß** bei Ansteuerung der jeweils n nebeneinanderliegenden Farbsubpixel je Bildpunkt (B) die farbsubpixelweise Verlegung der Intensitäten (I) in Zwischenschritten erfolgt, indem die Intensität (I) eines Farbsubpixels (SP), sowohl einen Anteil der der Information für das linke Auge entsprechenden Intensität als auch einen Teil der der Information für das rechte Auge entsprechenden Intensität enthält.

3. Verfahren nach Anspruch 2, **gekennzeichnet dadurch, daß** die Intensität (I) des Farbsubpixels (SP) aus Intensitätsanteilen zusammengesetzt ist, die den vom rechten bzw. linken Auge gesehenen Teilen der Breite des Farbsubpixels (SP) anteilig (Teilbreitenanteilen) entsprechen.

4. Verfahren nach Anspruch 2, **gekennzeichnet dadurch, daß** die Intensität (I) des Farbsubpixels (SP) unabhängig von den Teilbreitenanteilen aus je 50 % der Intensitäten des linken und rechten Farbsubpixels (SP) gebildet wird.

5. Verfahren nach Anspruch 2, **gekennzeichnet dadurch, daß** sich die der seitlichen Positionsveränderung des Betrachters entsprechende Gesamtveränderung zusammensetzt aus der elektronischen farbsubpixelweisen Verlegung der Intensitätswerte (I) der Farbsubpixel (SP) über einen oder mehrere horizontal benachbarte Pixel (P) und einer mechanischen seitlichen Verstellung des Displays oder des Lichts der Lichtquellen oder der optischen Mittel um einen Weg (s), der der ohne seitliche Verstellung am Rande eines Ausschnitts (A) sichtbaren Teilbreite eines Farbsubpixels (SP) oder deren Ausgleich zu einer vollen Farbsubpixelbreite entspricht.

6. Verfahren nach Anspruch 1, **gekennzeichnet dadurch, daß** je Bildpunkt n+1 nebeneinanderliegende Farbsubpixel angesteuert werden, wobei die Intensitäten (I) der beiden am Rand jeweils eines Bildpunktes (B) liegenden gleichfarbigen Farbsubpixel (SP) gleich groß sind.

7. Verfahren nach Anspruch 6, **gekennzeichnet dadurch, daß** die Intensität (I) der beiden jeweils am Rande eines Bildpunktes (B) liegenden Farbsubpixel (SP) der Intensität (I) dieser Farbe im Bildpunkt entsprechen.

8. Verfahren nach Anspruch 6, **gekennzeichnet dadurch, daß** die Intensität (I) der beiden jeweils am Rande eines Bildpunktes (B) liegenden Farbsubpixel (SP) mit der Vergrößerung des Abstandes des Betrachters vom Bildschirm erhöht wird.

9. Verfahren nach Anspruch 1 und 2 oder 1 und 6, **gekennzeichnet dadurch, daß** die farbsubpixelweise Verlegung der Intensitäten der Farbsubpixel (SP) programmtechnisch erfolgt.

10. Anordnung zur dreidimensionalen Darstellung von Information mit einem Flachdisplay (1) mit jeweils n in einem Pixel horizontal nebeneinander liegenden und in einer Zeile periodisch aufeinanderfolgenden Farbsubpixeln; mit Darstellungsmitteln, die so beschaffen sind, dass mit den Farbsubpixeln zwei simultan erzeugte stereoskopische Halbbilder, je eines für das rechte bzw. linke Auge des Betrachters, in eine Vielzahl von benachbarten, abwechselnd aufeinanderfolgenden rechten und linken senkrechten Spalten mit jeweils einem Bildpunkt pro Zeile aufgelöst sind, und mit dem Display vorgeordneten optischen Mitteln, mit denen die Spalten bzw. die Informationen der Spalten dem rechten bzw. linken Auge zugeordnet sind, **gekennzeichnet dadurch, daß** die Darstellungsmittel weiter so beschaffen sind, dass jeder Bildpunkt (B) aus den Farbanteilen von jeweils n+1 nebeneinander liegenden Farbsubpixeln (SP) zusammengesetzt ist und die horizontale Breite des mit den optischen Mitteln (2, 4 oder 5) jeweils sichtbaren Teils eines Bildpunktes (B) n Farbsubpixelbreiten entspricht.

11. Anordnung nach Anspruch 10, **gekennzeichnet dadurch, daß** bei einem Flachdisplay (1) mit periodisch in einer Zeile aufeinanderfolgenden drei Farbsubpixeln (SP) für die drei Grundfarben ROT (R), GRÜN (G) und BLAU (B) jeder Bildpunkt (B) aus jeweils vier aufeinander folgenden Farbsubpixeln (SP) besteht und in einer Displayzeile die die Bildpunkte (B) bildenden Farbsubpixel (SP) in den Sequenzen RGBR, GBRG, BRGB usw. aufeinander folgen.

12. Anordnung nach Anspruch 10, **gekennzeichnet dadurch, daß** bei einer Ausführung mit einem dem Display (1) vorgeordneten Barrieregitter (2) die Breite der Gitterlinien größer als die Breite der Spalte zwischen den Gitterünien des Barrieregitters (2) ist, wobei die Gitterlinien im Strahlengang zu den Augen (3) des Betrachters n+1 Farbsubpixelbreiten abdecken und die Spalte zwischen den Gitterlinien jeweils für n Farbsubpixelbreiten geöffnet sind.

13. Anordnung nach Anspruch 10, **gekennzeichnet dadurch, daß** bei einer Ausführung mit einer oder mehreren dem Display (1) vorgeordneten Prismenmasken (4) die Breite der Prismen n+1 Farbsubpixelbreiten entspricht und der Prismenmaske (4) ein Abblendgitter mit vertikalen Gitterlinien (4a) zugeordnet ist, wobei die Breite jeder Gitterlinie (4a) der Breite eines Farbsubpixels (SP) entspricht und die Gitterlinien (4a) an den Rändern der Prismen jeweils eine halbe Farbsubpixelbreite abdecken.

14. Anordnung nach Anspruch 10, **gekennzeichnet dadurch, daß** bei einer Ausführung mit einer dem Display (1) vorgeordneten Lentikularmaske (5) die Breite der zylindrischen Linsen 2(n+1) Farbsubpixelbreiten entspricht und und der Lentikularmaske (5) ein Abblendgitter mit vertikalen Gitterlinien (5a) zugeordnet ist, wobei die Breite jeder Gitterlinie (5a) der Breite eines Farbsubpixels (SP) entspricht und die Gitterlinien (5a) an den Rändern der Linsen jeweils eine halbe Farbsubpixelbreite und in der Mitte der Linsen eine Farbsubpixelbreite abdecken.

## Claims

1. Method for the three-dimensional representation of information in which using a flat-panel display with, in each pixel, n coloured subpixels horizontally adjacent and periodically succeeding on the line two pictures of a stereoscopic pair, one for the right eye and one for the left eye of the observer, are produced simultaneously and resolved in a number of adjacent, alternately succeeding right and left columns with one image point per line, the columns, or the image information of the columns, respectively, are assigned to the right, or left eye, respectively, with optical means and the lateral angle of the eye position of the observer from the normal to the display is measured and the pictures of the pair are tracked to the lateral movement of an observer, **characterized in that** for a lateral movement of the observer the image points (B) and, together with them, the columns are shifted by a lateral shifting, for each coloured subpixel, of the intensities (I) of the coloured subpixels (SP) to horizontally adjacent coloured subpixels (SP) on the display (1) and this shifting is approximately proportional to the lateral movement of the observer.

2. Method to Claim 1 **characterized in that** when the n adjacent coloured subpixels per image point (B) are addressed the intensities (I) of the coloured subpixels are shifted for each coloured subpixel in intermediate steps with the intensity (I) of a coloured subpixel (SP) containing both a proportion of the intensity corresponding to the information for the left eye and a proportion of the intensity corresponding to the information for the right eye.

3. Method to Claim 2 **characterized in that** the intensity (I) of the coloured subpixel (SP) is composed of intensity proportions which correspond to the proportions seen by the right or left eye, respectively, of the width of the coloured subpixel (SP) (partial width proportions).

4. Method to Claim 2 **characterized in that** the intensity (I) of the coloured subpixel (SP) is made independently of the partial width proportions out of 50 % in each case of the intensities of the left and right coloured subpixels (SP).

5. Method to Claim 2 **characterized in that** the total change which corresponds to the lateral change of the position of the observer is composed of the electronic shifting of the intensity values (I) of the individual coloured subpixels (SP) over one or several horizontally adjacent pixels (P) and a mechanical lateral shifting of the display or of the light of the light sources or of the optical means by a distance (s) that corresponds to the partial width visible without lateral shifting on the border of a section (A) of a coloured subpixel (SP) or to the compensation of the partial width to a whole coloured subpixel width.

6. Method to Claim 1 **characterized in that** n+1 adjacent coloured subpixels are addressed per image point whereby the intensities (I) of the two subpixels (SP) of the same colour situated on the borders of an image point (B) are equal.

7. Method to Claim 6 **characterized in that** the intensities (I) of the two coloured subpixels (SP) situated on the borders of an image point (B) correspond to the intensity (I) of this colour in the image point.

8. Method to Claim 6 **characterized in that** the intensities (I) of the two coloured subpixels (SP) situated on the borders of an image point (B) are increased with growing distance of the observer from the display.

9. Method to Claim 1 and 2 or 1 and 6 **characterized in that** the shifting of the intensities of the coloured subpixels (SP) is, for each coloured subpixel, carried out by programming means.

10. Arrangement for the three-dimensional representation of information using a flat-panel display (1) with n coloured subpixels horizontally adjacent and periodically succeeding on the line, in each pixel, with presentation means which are made in such a way that through the coloured subpixels two simultaneously produced pictures of a stereoscopic pair, one for the right eye and one for the left eye of the observer are resolved in a number of adjacent, alternately succeeding right and left vertical columns with one image point in each case per line, and with optical means arranged in front of the display, by which the columns, or the image information of the columns, respectively, are assigned to the right, or left eye, respectively, **characterized in that** the presentation means are further made in such a way that each image point (B) is composed of the colour contents of n+1 adjacent coloured subpixels (SP) and the horizontal width of the proportion visible by optical means (2, 4 or 5) of an image point (B) corresponds to n coloured subpixel widths.

11. Arrangement to Claim 10 **characterized in that** for a flat-panel display (1) with three coloured subpixels (SP) periodically succeeding on a line for the three primary colours RED (R), GREEN (G) and BLUE (B), each image point (B) consists of four succeeding coloured subpixels (SP) and on a display line the coloured subpixels (SP) forming the image points (B) succeed each other in the sequences RGBR, GBRG, BRGB, etc.

12. Arrangement to Claim 10 **characterized in that** for an embodiment with a barrier grating (2) arranged in front of the display (1), the width of the bars is greater than the width of the slits between the bars of the barrier grating (2), whereby the bars in the path of the rays to the eyes (3) of the observer each cover n+1 coloured subpixel widths and the slits between the bars of the grating each are open for n coloured subpixel widths.

13. Arrangement to Claim 10 **characterized in that** for an embodiment with one or several prism masks (4) arranged in front of the display (1), the widths of the prisms each correspond to n+1 coloured subpixel widths and a dimming grid with vertical grid bars (4a) is assigned to the prism mask (4), whereby the width of each grid bar (4a) corresponds to the width of a coloured subpixel (SP) and the grid bars (4a) on the borders of the prisms each cover half of a coloured subpixel width.

14. Arrangement to Claim 10 **characterized in that** for an embodiment with a lenticular mask (5) arranged in front of the display (1), the widths of the cylindrical lenses each correspond to 2(n+1) coloured subpixel widths and a dimming grid with vertical grid bars (5a) is assigned to the lenticular mask (5), whereby the width of each grid bar (5a) corresponds to the width of a coloured subpixel (SP) and the grid bars (5a) on the borders of the lenses each cover half of a coloured subpixel width, and in the centre of the lenses each cover a coloured subpixel width.

## Revendications

1. Procédé pour la représentation tridimensionnelle d'informations, dans lequel sont générées simultanément, au moyen d'un écran plat dont chaque pixel comporte n sous-pixels chromatiques adjacents horizontalement et se succédant périodiquement dans une ligne, deux demi-images stéréoscopiques, une pour l'oeil droit, une pour l'oeil gauche de l'observateur, lesquelles sont résolues en une multiplicité de colonnes verticales contiguës, alternativement droites et gauches, de chacune un point d'image par ligne, procédé dans lequel les colonnes ou plus exactement les informations d'image des colonnes sont affectées par des moyens optiques à l'oeil droit ou gauche, l'angle latéral de la position des yeux de l'observateur par rapport à la normale du moniteur est mesurée et les demi-images sont asservies au mouvement latéral d'un observateur,
**caractérisé par le fait que** dans le cas d'un mouvement latéral d'un observateur, les points d'image (B) et avec eux les colonnes sont décalés latéralement par un déplacement sous-pixel chromatique par sous-pixel chromatique des intensités (I) des sous-pixels chromatiques (SP) sur des sous-pixels chromatiques (SP) horizontalement contigus sur l'écran (1), ce décalage étant approximativement proportionnel au mouvement latéral de l'observateur.

2. Procédé selon la revendication 1, **caractérisé par le fait que** dans le cas d'une activation des n sous-pixels chromatiques adjacents de chaque point d'image (B), le déplacement sous-pixel chromatique par sous-pixel chromatique des intensités (I) a lieu par pas intermédiaires, l'intensité (I) d'un sous-pixel chromatique (SP) contenant à la fois une part de l'intensité correspondant à l'information pour l'oeil gauche et une part de l'intensité correspondant à l'information pour l'oeil droit.

3. Procédé selon la revendication 2, **caractérisé par le fait que** l'intensité (I) du sous-pixel chromatique (SP) est composée de parts d'intensité correspondant en proportion aux parties de la largeur du sous-pixel chromatique (SP) vues par l'oeil droit et l'oeil gauche (parts de largeur partielle).

4. Procédé selon la revendication 2, **caractérisé par le fait que** l'intensité (I) du sous-pixel chromatique (SP) est formée dans chaque cas, indépendamment des parts de largeur partielle, de 50 % des intensités des sous-pixels chromatiques (SP) gauche et droit.

5. Procédé selon la revendication 2, **caractérisé par le fait que** le changement total correspondant au changement de position latérale de l'observateur se compose du déplacement électronique sous-pixel chromatique par sous-pixel chromatique des valeurs d'intensité (I) des sous-pixels chromatiques (SP) sur un ou plusieurs pixels (P) horizontalement contigus et d'un déplacement latéral mécanique de l'écran ou de la lumière des sources lumineuses ou des moyens optiques d'une valeur (s) qui correspond à la largeur partielle visible au bord d'un secteur (A) d'un sous-pixel chromatique (SP) sans déplacement latéral ou à sa compensation jusqu'à une pleine largeur de sous-pixel chromatique.

6. Procédé selon la revendication 1, **caractérisé par le fait que,** pour chaque point d'image, n+1 sous-pixels chromatiques adjacents sont activés, les intensités (I) des deux sous-pixels chromatiques (SP) de même couleur situés chacun au bord d'un point d'image (B) sont de même valeur.

7. Procédé selon la revendication 6, **caractérisé par le fait que** l'intensité (I) des deux sous-pixels chromatiques (SP) situés chacun au bord d'un point d'image (B) correspond à l'intensité (I) de cette couleur dans le point d'image.

8. Procédé selon la revendication 6, **caractérisé par le fait que** l'intensité (I) des deux sous-pixels chromatiques (SP) situés chacun au bord d'un point d'image (B) augmente avec l'agrandissement de la distance de l'observateur à l'écran.

9. Procédé selon les revendications 1 et 2 ou 1 et 6, **caractérisé par le fait que** le déplacement sous-pixel chromatique par sous-pixel chromatique des intensités des sous-pixels chromatiques (SP) est réalisé par programmation.

10. Dispositif pour la représentation tridimensionnelle d'informations avec un écran plat (1) dont chaque pixel comporte n sous-pixels chromatiques adjacents horizontalement et se succédant périodiquement dans une ligne, avec des moyens de représentation conçus de telle sorte qu'avec les sous-pixels chromatiques deux demi-images stéréoscopiques générées simultanément, une pour l'oeil droit et une pour l'oeil gauche de l'observateur, sont résolues en une multiplicité de colonnes verticales contiguës, alternativement droites et gauches, de chacune un point d'image par ligne, et avec des moyens optiques associés à l'écran avec lesquels les colonnes ou plus exactement les informations des colonnes sont affectées à l'oeil droit ou gauche, **caractérisé par le fait que** les moyens de représentation sont de plus conçus de telle sorte que chaque point d'image (B) est composé des composantes chromatiques de n+1 sous-pixels chromatiques (SP) adjacents et que la largeur horizontale de la partie d'un point d'image (B) visible avec les moyens optiques (2, 4 ou 5) correspond à n largeurs de sous-pixel chromatique.

11. Dispositif selon la revendication 10, **caractérisé par le fait que,** dans le cas d'un écran plat (1) avec trois sous-pixels chromatiques (SP) pour les trois couleurs primaires ROUGE (R), VERT (G) et BLEU (B) se succédant périodiquement dans une ligne, chaque point d'image (B) se compose de quatre sous-pixels chromatiques (SP) successifs et que, dans une ligne d'écran, les sous-pixels chromatiques (SP) formant les points d'image (B) se succèdent selon les séquences RGBR, GBRG, BRGB, etc.

12. Dispositif selon la revendication 10, **caractérisé par le fait que,** dans le cas d'une réalisation avec une grille barrière (2) placée devant l'écran (1), la largeur des lignes de grille est supérieure à la largeur des colonnes entre les lignes de grille de la grille barrière (2), les lignes de grille couvrant n+1 largeurs de sous-pixels chromatiques sur le trajet des rayons vers les yeux (3) de l'observateur et les fentes entre les lignes de grille étant ouvertes à chaque fois pour n largeurs de sous-pixels chromatiques.

13. Dispositif selon la revendication 10, **caractérisé par le fait que,** dans le cas d'une réalisation avec un ou plusieurs masques à prismes (4) placés devant l'écran (1), la largeur des prismes correspond à n+1 largeurs de sous-pixels chromatiques et qu'au masque à prismes (4) est associée une grille anti-éblouissement avec des lignes de grille verticales (4a), la largeur de chaque ligne de grille (4a) correspondant à la largeur d'un sous-pixel chromatique (SP) et les lignes de grille (4a) couvrant chaque fois une demi-largeur de sous-pixel chromatique aux bords des prismes.

14. Dispositif selon la revendication 10, **caractérisé par le fait que,** dans le cas d'une réalisation avec un masque lenticulaire (5) placé devant l'écran (1), la largeur des lentilles cylindriques correspond à 2(n+1) largeurs de sous-pixels chromatiques et qu'au masque lenticulaire (5) est associée une grille anti-éblouissement avec des lignes de grille verticales (5a), la largeur de chaque ligne de grille (5a) correspondant à la largeur d'un sous-pixel chromatique (SP) et les lignes de grille (5a) couvrant chaque fois une demi-largeur de sous-pixel chromatique aux bords des lentilles et une largeur de sous-pixel chromatique au milieu des lentilles.
